# EUROPEAN PATENT SPECIFICATION

(11) **EP 3 853 564 B1**
(45) Date of publication and mention of the grant of the patent: **14.08.2024**
(21) Application number: 19769795.6
(22) Date of filing: 17.09.2019
(51) Int. Cl.: G01G 19/02

(54) **DETERMINING WEIGHTS OF VEHICLES IN MOTION**
BESTIMMUNG DER GEWICHTE VON FAHRZEUGEN IN BEWEGUNG
DÉTERMINATION DES POIDS DE VÉHICULES EN MOUVEMENT

(30) Priority: 17.09.2018 DE 102018122730
(43) Date of publication of application: 28.07.2021
(73) Proprietor: Optics11 B.V., 1081 HV Amsterdam (NL)
(72) Inventor: SINGER, Johannes Maria, 2264 SG Leidschendam (NL); KARABACAK, Devrez Mehmet, 2264 SG Leidschendam (NL); HOPMAN, Lukas Johannes, NL SG Leidschendam (NL)
(74) Representative: den Braber, Gérard Paul
(86) International application number: PCT/EP2019/074811
(87) International publication number: WO 2020/058242

(56) References cited:
- EP-A1- 2 372 322
- WO-A1-02/23504
- WO-A1-2017/196168

## Description

### FIELD OF THE INVENTION

The present invention relates to the field of determining weights of vehicles in motion.

### BACKGROUND OF THE INVENTION

Measuring or otherwise determining the weights of vehicles has long been a necessity for calculating road tolls and monitoring compliance with applicable regulations. It is well known to use large scales at roadside weighing stations to weigh vehicles traveling at a low speed, such as walking speed. However, such roadside weighing stations are expensive to build and to maintain, and they impede the flow of traffic.

Various systems have been proposed which allow vehicles to be weighed at full traveling speeds on a motorway. These systems are known as Weigh-In-Motion (WIM) systems. For example, US 2011/0127090 A1 summarizes known techniques used in WIM systems, including piezoelectric sensors, bending plate sensors, and hydraulic load cell sensors. Patent publication WO 2017/196168 describes a system comprising optic strain-sensor elements arranged below a traffic carrying surface. A conveyance element of a vehicle moving over the traffic carrying surface induces strains in the optic strain-sensor elements. This results in changes in an optical signal modulated by the optic strain-sensor elements, which changes can be identified.

However, a need remains for a WIM system which is relatively inexpensive to install and maintain, provides reliable measurements, and does not negatively affect the flow of traffic.

### SUMMARY OF THE INVENTION

The present invention is defined by the independent claims. The dependent claims concern optional features of some embodiments of the invention.

According to an aspect of the invention, load values are determined from strain values, wherein the load values correspond to vertical loads exerted by wheels of vehicles traveling along a trafficway, and the strain value represent strains in a plane parallel to a surface layer of the trafficway generated by the at least one load. A model of at least the surface layer is used, wherein the model comprises a calculation rule and a plurality of model parameters. In a training phase, given load values and given strain values are applied to the model to determine values for the plurality of model parameters. In a production phase, measured strain values and the values for the plurality of model parameters determined during the training phase are applied to the model to determine load values.

An indication of a weight of a vehicle may be based on a plurality of load values that have been determined as defined hereinbefore from of a plurality of strain values as measured by a plurality of strain gauges arranged in, or on top of, the surface layer of the trafficway.

In some embodiments, at least one of the model parameters is adaptively updated. The model may be implemented, for example and without limitation, by a parameterized scaling function, or by a neural network.

In some embodiments, a wavelet compression technique is used to compress a plurality of strain values measured by a plurality of strain gauges, the plurality of strain gauges being arranged in, or on top of, a surface layer of a trafficway.

The invention comprises methods, computing apparatus, and computer-readable media. For example, a computer-readable medium according to the present invention may comprise suitable program instructions to realize the recited operations, for example on a general-purpose computer or in a programmable integrated circuit. The computer-readable medium may be any kind of physical or non-physical data carrier like, for example, a computer disk or a CD-ROM or a semiconductor memory or a signal transmitted over a computer network.

### BRIEF DESCRIPTION OF THE DRAWINGS

Further features, objects and advantages of the invention will become apparent from the following detailed description, in connection with the annexed schematic drawings, in which:
Fig. 1 shows a cross-sectional view of a trafficway with embedded strain gauges;
Fig. 2a to Fig. 2d show top views of the trafficway of Fig. 1 in four different variants, each with embedded strain gauges;
Fig. 3 shows an example of a heatmap with measured strain values;
Fig. 4 shows operations performed by a roadside processing unit, according to a sample embodiment of the invention;
Fig. 5 shows operations performed by a processing center and a calibration module, according to the sample embodiment also shown in Fig. 4;
Fig. 6 illustrates a scaling function; and
Fig. 7 illustrates possibilities for implementing a model, according to sample embodiments of the present invention.

### DETAILED DESCRIPTION OF EMBODIMENTS OF THE INVENTION

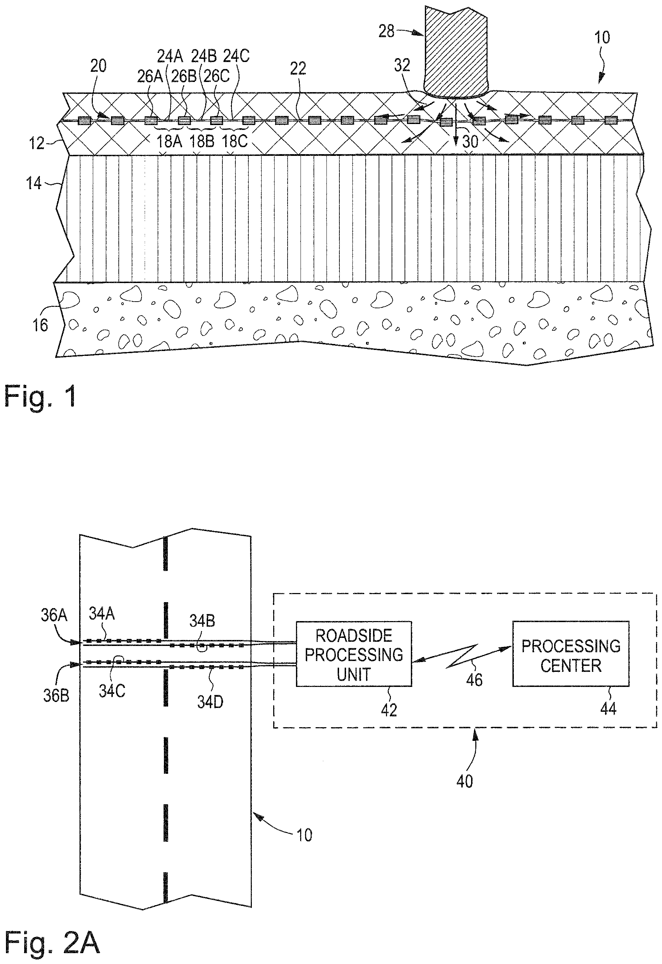

The cross-sectional view of Fig. 1 illustrates a trafficway 10, such as a public or private road or street, a taxiway or runway of an airport, a public or private parking lot, or a drive-through weighing station. In line with common principles of trafficway construction, the trafficway 10 comprises a surface layer 12 arranged on top of a subconstruction 14, wherein the subconstruction 14 in turn rests on natural ground 16. As a non-limiting example, the surface layer 12 may be made of, or comprise, asphalt (also called pavement or tarmac), i.e., mineral aggregate bound together with bitumen. Many other compositions of the surface layer 12 are in line with the teachings of the present invention; the only requirement is that the surface layer 12 has elastic or viscoelastic properties to a sufficient degree.

In many embodiments, the surface layer 12 comprises various sub-layers or other embedded elements. In other words, the surface layer 12 does not need to be uniform along its vertical and/or horizontal extensions, even if some embodiments use a uniform surface layer 12. In some embodiments, the surface layer 12 comprises some or all of the following sub-layers: surface dressing, surface course, binder course, and/or base course. In other embodiments, the surface layer 12 is constituted by a single asphalt layer that is essentially uniform along its vertical extension. The overall thickness of the surface layer 12 may, in some embodiments, be at least 3 cm and at most 50 cm.

The subconstruction 14 may comprise any suitable materials and sub-layers, such as, for example and without limitation, a frost protection layer. In some embodiments, the surface layer 12 and the subconstruction 14 are distinguished in that all sub-layers of the surface layer 12 comprise asphalt or bitumen, while the subconstruction 14 does not contain any bitumen.

In the presently described embodiments, a plurality of strain gauges 18A, 18B, 18C, ... - in the following designated as strain gauges 18x - are embedded into the surface layer 12. Each of the strain gauges 18x measures strain, i.e., local deformation, in a direction that is substantially parallel to the surface layer 12. In Fig. 1, this direction runs horizontally across the drawing plane, i.e., at a right angle to the direction of traffic on the trafficway 10. However, the present invention is not limited to any particular orientation of the measurement direction of the strain gauges 18x with respect to the direction of traffic on the trafficway 10.

In many embodiments, the strain gauges 18x are embedded within the surface layer 12, so that at least a portion of the surface layer 12 covers the strain gauges 18x. For example, the covering portion may have a thickness in the range of 2 cm to 40 cm. This arrangement protects the strain gauges 18x against potentially detrimental environmental effects (such as moisture, thawing agents, direct sun radiation, and so on) and further keeps the surface of the trafficway 10 completely intact. However, the present disclosure also comprises embodiments in which the strain gauges 18x are arranged on top of the surface layer 12, where they may be protected by a thin plastic or rubber or metal housing affixed to the surface of the trafficway 10. In these embodiments, the housing may cover the top portion of the strain gauges 18x, or it may just be arranged before and after the strain gauges 18x, allowing direct contact of vehicle wheels with the strain gauges 18x. However, even in these embodiments the strain gauges 18x are configured to measure the strain in a plane substantially parallel to the surface layer 12, instead of the weight of a vehicle acting substantially perpendicular to the surface layer 12.

The strain gauges 18x in the presently described embodiment are arranged in one or more linear arrangements, which are formed by one or more chains 20. In many embodiments, the strain gauges 18x are optical strain gauges, in particular optical fiber strain gauges. A chain 20 of optical fiber strain gauges comprises, an a manner known as such, an optical fiber 22 in which a plurality of fiber Bragg gratings (FBGs) 24A, 24B, 24C, ... - in the following denoted by reference sign 24x - are formed. The FBGs 24x are separated by anchors 26A, 26B, 26C, ... - in the following denoted by reference sign 26x. Each FBG 24x is formed by a periodic variation of the refractive index of the core of the optical fiber 22. This generates a wavelength-specific dielectric mirror, which reflects light in a narrow wavelength range of about 0.1 nm to 1.0 nm, centered on the Bragg wavelength of the FBG 24x. The reflection corresponds to notch in the transmission spectrum of the optical fiber 22. The individual FBGs 24x of the optical fiber 22 have slightly different grid periods and thus slightly different Bragg wavelengths. The FBGs 24x can therefore be distinguished by the different center wavelengths of the corresponding notches in the overall transmission spectrum of the optical fiber 22. For example, if the optical fiber 22 is connected to a tunable laser producing light within a 40 nm wavelength range, about 20-30 different FBGs 24x on a single optical fiber 22 (i.e., about 20-30 strain gauges 18x on a single chain 20) can be distinguished.

In the presently described embodiments, the material of the surface layer 12 (e.g., asphalt) firmly holds the embedded chain 20 of the strain gauges 18x in place at the anchors 26x. Any strain within the surface layer 12 leads to a local deformation of the surface layer 12, to a corresponding movement of the anchors 26x relative to each other, and to a corresponding stretching of the portions of the optical fiber 22 containing the FBGs 24x between the anchors 26x. If a particular portion of the optical fiber 22 is stretched, then the FBG 24x within this portion will also be stretched, leading to a change of the center wavelength of the corresponding notch in the overall transmission spectrum of the optical fiber 22. In other words, an analysis of the overall transmission spectrum allows individual strain values for each of the stain gauges 18x along the optical fiber 22 to be determined, wherein each strain value indicates a stretching of a portion of the optical fiber 22 between two subsequent anchors 26x.

Fig. 1 shows an example of a vehicle wheel 28 exerting a force (shown by arrow 30) onto the surface layer 12 of the trafficway 10. This force leads to a small local deformation of the surface layer 12, which is shown in Fig. 1 in a greatly exaggerated manner. As a consequence of this deformation, strains (shown by arrows 32) arise within the surface layer 12 and within the embedded chain 20 of strain gauges 18x. The strain gauges 18x measure a component of this strain in the direction of the chain 20, in the manner explained above. As a non-limiting example, the wheel 28 of a tractor trailer traveling along the trafficway 10 may cause a maximum stretching of the optical fiber 22 (corresponding to a strain in the direction of the optical fiber 22, i.e., in a direction that is transversal to the traveling direction of the tractor trailer) of about 10 µm/mm.

The present invention is not limited to any particular kind of strain gauges 18x, nor to any particular physical principle based on which the strain gauges 18x operate. Even though the optical fiber strain gauges shown in Fig. 1 are used in many embodiments, other embodiments may make use of different kinds of strain gauges 18x, as long as these strain gauges 18x measure strain in a plane substantially parallel to the surface layer 12.

Fig. 2a shows a top view of the trafficway 10, in which a plurality of strain gauges 18x are arranged in a total of four linear arrangements 34A, 34B, 34C and 34D - in the following denoted by reference sign 34x. In the presently described embodiments, each of the linear arrangements 34x corresponds to a chain 20 as shown in Fig. 1, but the present disclosure is not limited in this regard. Each of the linear arrangements 34x runs in a direction that is, in the example of Fig. 2a, essentially at a right angle or traverse to the direction of travel on the trafficway 10. In the presently described embodiments, the direction of the linear arrangements 34x coincides with the direction in which the strain gauges 18x measure the strain in the plane substantially parallel to the surface layer 12. However, this is not the case in all embodiments. For example, even in embodiments which use optical fiber strain gauges 18x as described above, each optical fiber 22 could be arranged in the form of a sinuous line, so that the direction in which the strain is measured differs from the direction of the linear arrangement 34x of the strain gauges 18x.

The example embodiment shown in Fig. 2a uses two measurement bands 36A, 36B - in the following denoted by reference sign 36x. A first measurement band 36A comprises the two linear arrangements 34A and 34B, while a second measurement band 36B comprises the two linear arrangements 34C and 34D. The reason why the measurement bands 36x in the presently described embodiment each comprise more than one single linear arrangement 34x is just that the chains 20 of optical fiber strain gauges 18x used in the presently described embodiment are limited to at most 20-30 strain gauges 18x on each optical fiber 22. As more strain gauges 18x are needed to provide complete coverage of the trafficway 10 in the presently described embodiment, two or more chains 20 are located closely together to form each of the measurement bands 36x. For example, a measurement band 36x that comprises a pair of chains 20 provides more than 40 strain gauges 18x across the trafficway 10, and measurement bands 36x that comprise triples, quadruplets, etc. of chains 20 provide even more strain gauges 18x. In some embodiments, the spacing between the linear arrangements 34x within each measurement band 36x is as small as possible, and may be less than 10 cm, or preferably less than 5 cm.

In the embodiment shown in Fig. 2a, the first measurement band 36A is located at a predetermined distance from the second measurement band 36B, the distance being substantially larger than the spacing between the linear arrangements 34x within each measurement band 36x. For example, the predetermined distance may be larger than 30 cm, or preferably larger than 50 cm. The two measurement bands 36A, 36B are used to obtain a highly accurate measurement of the speed of a vehicle crossing the two measurement bands 36A, 36B, as the vehicle's speed is one of the parameters needed in the subsequent calculations to determine the weight of the vehicle.

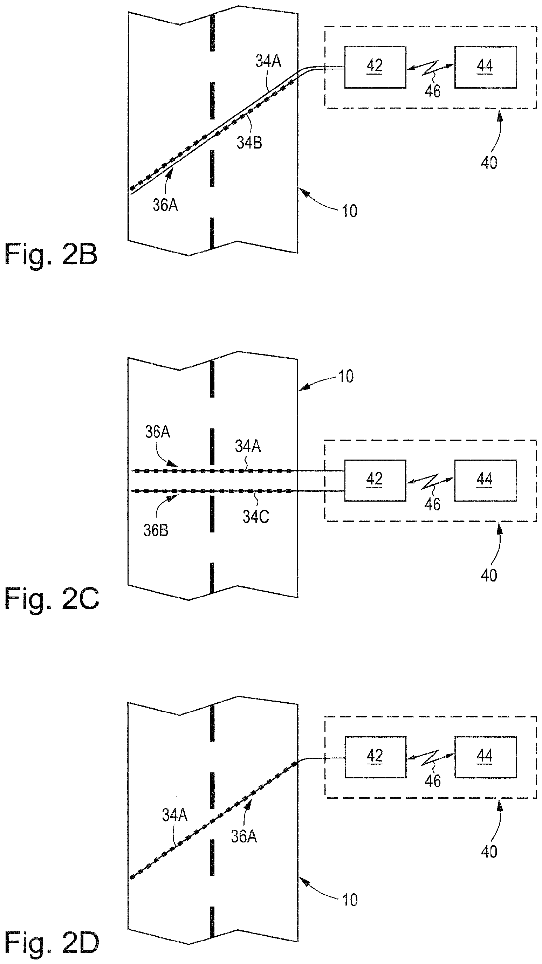

While the example embodiment shown in Fig. 2a uses two linear arrangements 34x in each of the two measurement bands 36x, there are also embodiments in which each or some of the measurement bands 36x comprise only a single linear arrangement 34x, such as a single chain 20. Fig. 2c shows an example with two measurement bands 36A, 36B and a total of two linear arrangements 34A, 34C. Each linear arrangement 34A, 34C in the example of Fig. 2c comprises a sufficient number of strain gauges 18x to extend across the whole width of the trafficway 10, such as, without limitation, about 30-50 strain gauges 18x on a single optical fiber 22. These kinds of measurement bands 36A, 36B may be constructed, for example and without limitation, by using a tunable laser with a sufficiently large wavelength range, or by using two or more tunable lasers that produce light in separate wavelength ranges.

In the example embodiments described so far, as shown in Fig. 2a and Fig. 2c, each of the linear arrangements 34x runs in a direction that is essentially at a right angle or traverse to the direction of travel on the trafficway 10. However, embodiments are also contemplated in which the direction of the linear arrangements 34x is oblique to the direction of travel on the trafficway 10, i.e., at an angle that is neither 0° nor 90°. For example, the angle may be between 10° and 80°, or between 30° and 60°. Examples of such embodiments are shown in Fig. 2b and Fig. 2d.

The embodiments shown in Fig. 2b and Fig. 2d are especially economical, as they use only a single measurement band 36A, which crosses the trafficway 10 at an oblique angle. The speed of a typical vehicle can then be determined from the time difference between a first time when a wheel at one side of the vehicle crosses the measurement band 36A, and a second time when a wheel on the same axle, but at the other side of the vehicle, crosses the measurement band 36A. The single measurement band 36A may comprise a single linear arrangement 34A (as exemplified in Fig. 2d), or two linear arrangements 34A, 34B (as exemplified in Fig. 2b), or more than two linear arrangements 34x.

It is also possible in further embodiments to provide high accuracy by using two or more measurement bands 36x of which at least one is arranged at an oblique angle to the direction of travel on the trafficway 10. Furthermore, in embodiments having two or more measurement bands 36x, at least two of these measurement bands 36x may be arranged at different angles with respect to the direction of travel on the trafficway 10, i.e., non-parallel with respect to each other.

Yet further, in some embodiments a sufficient accuracy is achieved by a single measurement band 36A having one or more linear arrangement(s) 34x running at a right angle to the direction of traffic on the trafficway 10, as the speed of a vehicle may be inferred (albeit with a relatively low accuracy) by the width of a strain pulse generated when a wheel 28 of the vehicle crosses the measurement band 36A.

In embodiments which use two or more measurement bands 36x, each of the measurement bands 36x may be configured identically, and may in particular comprise the same number of strain gauges 18x. However, the present disclosure also comprises embodiments in which the individual measurements bands 36x are configured differently from each other. For example, a second measurement band 36B may comprise fewer strain gauges 18x and/or simpler strain gauges 18x than a first measurement band 36A. Configurations of this kind are particularly inexpensive, and are well suited for embodiments in which measured strain values from the second measurement band 36B are only used for a rough determination of wheel imprints in order to calculate vehicle speeds, while measured strain values from the first measurement band 36A are evaluated in detail to determine vehicle weights.

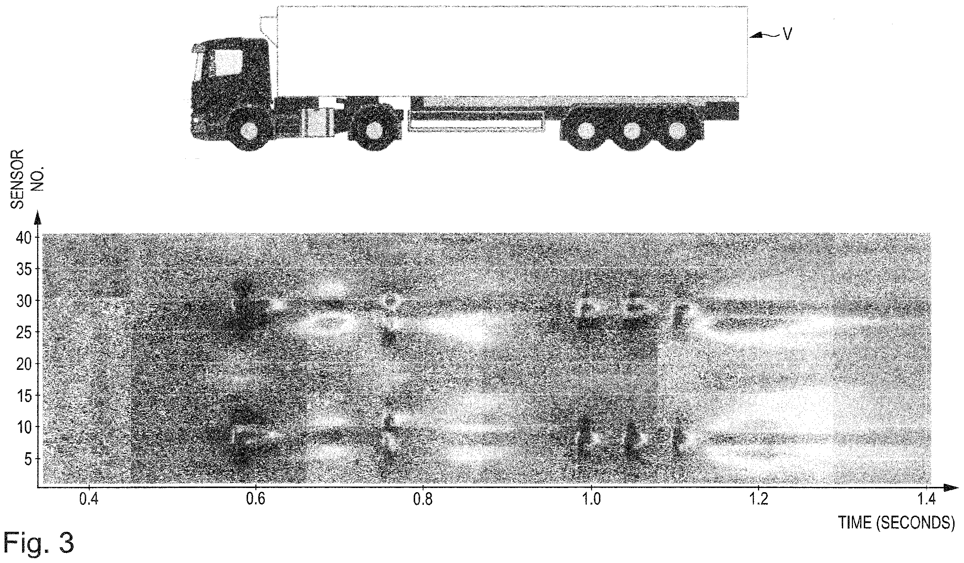

In the embodiment illustrated in Fig. 2a, the strain gauges 18x in each measurement band 38x may produce 40 measured strain values across the width of the trafficway 10, with a measuring frequency of about 2 kHz. Fig. 3 shows an example heatmap of these measured strain values when a tractor trailer V crosses the first measurement band 36A. The X axis in the heatmap of Fig. 3 corresponds to the elapsed time, and the Y axis corresponds to the location of the respective sensor 18x across the trafficway 10. The scale of the X axis has been chosen so that the extension of the heatmap in the X direction is registered with the picture of the tractor trailer V shown above the heatmap. The strain values shown in the heatmap of Fig. 3 comprise both static and dynamic components, so that the heatmap would look different if the tractor trailer V traveled at a different speed, even if the time scale was suitably adjusted. The vehicle shown in Fig. 3 is a tractor trailer or truck, but the present disclosure is not limited in this regard. The present invention may be used in connection with all kinds of vehicles, including cars of any size, motorcycles, and even aerial vehicles such as aircraft during taxiing.

Returning to Fig. 2a - Fig. 2d, these drawing figures further show a system 40 for determining weights of vehicles in motion on the trafficway 10 according to the presently described embodiments. The system 40 comprises a roadside processing unit 42 and a processing center 44 communicating with each other via a data communication channel 46. In some but not all embodiments, the data communication channel 46 is a wireless data communication channel. The processing center 44 serves not only the single roadside processing unit 42 shown in Fig. 2a - Fig. 2d, but also a plurality of further roadside processing units. The data communication channel 46 is implemented using commonly known technologies and comprises suitable base stations, receivers/transmitters, wire-bound data communication sections, and so on. In some embodiments, the data communication channel 46 is a wireless data communication channel implemented, at least in certain sections, using 4G technology.

The roadside processing unit 42 is located in physical proximity to the trafficway 10 near the strain gauges 18x. The roadside processing unit 42 comprises suitable hardware to connect to the strain gauges 18x and control the measurement operations. The roadside processing unit further comprises computing hardware for performing certain (pre-)processing functions, which will be described below. However, the roadside processing unit 42 in the presently described embodiment does not have sufficient computing power to perform a full processing of the measured strain values. This allows the roadside processing unit 42 to be constructed as a relatively simple and inexpensive apparatus, in order to reduce the consumption of electric power to a level that is easily available along the trafficway 10, and also to reduce the incentive for theft of the roadside processing unit 42.

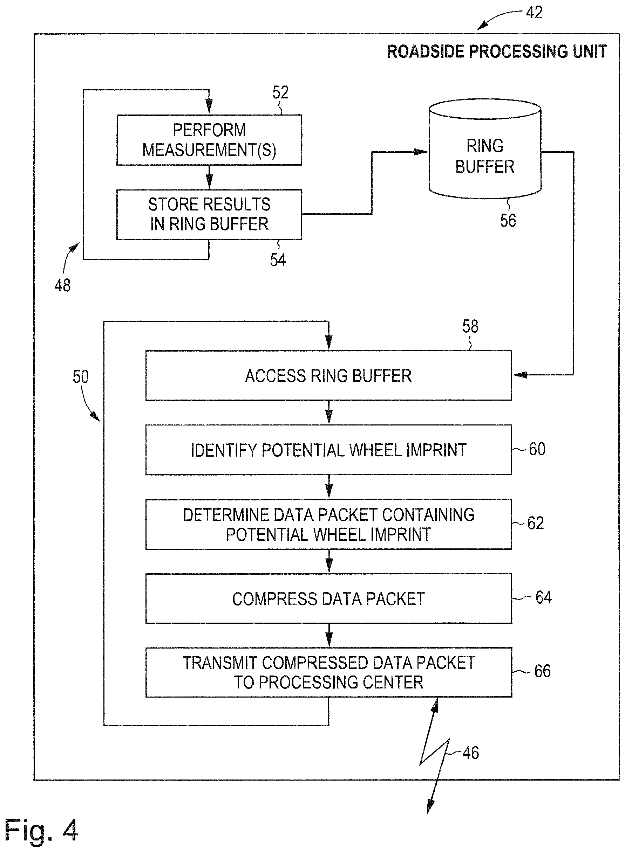

Fig. 4 schematically shows processes performed by the roadside processing unit 42. The processes comprise a data acquisition loop 48 and a data processing loop 50. The data acquisition loop 48 performs measurements (step 52) to obtain measured strain values, and stores these values (step 54), together with suitable metadata such as timestamps or location indications, in a ring buffer 56. In some embodiments, the ring buffer 56 may be dimensioned to hold about 10 min to 60 min worth of measurement data, sampled at a frequency of 2 kHz, for example. Steps 52 and 54 may be performed alternately, or in any suitable quasi-parallel or parallel fashion.

The data processing loop 50 accesses, in step 58, the ring buffer 56, and analyzes the data contained therein. Step 60 concerns the identification of a potential wheel imprint. For this purpose, the measured strain values from the second measurement band 36B (the "speedline") are analyzed. This analysis is done in a rather cursory fashion. While the analysis should find all actual wheel imprints, false positives (i.e., artifacts which are incorrectly identified as a wheel imprint) are permissible, as such false positives will in any case be sorted out later. Whenever a potential wheel imprint is identified in step 60, the processing loop 50 goes on to step 62, in which a data packet of measured strain values is determined which contains the potential wheel imprint. For example and without limitation, this data packet may comprise measured strain values along a width of 1.0 m - 2.0 m across the trafficway 10, and during a time interval of 0.1 s - 10 s. In embodiments in which the second measurement band 36B has a lower resolution and/or lower accuracy than the first measurement band 36A, the data packet preferably comprises measured strain values from the first measurement band 36A (the "weighing line"). In embodiments in which only a single measurement band 36A is provided (shown, for example in Fig. 2b and Fig. 2d), the operations of steps 60 and 62 are all performed based on the measured strain values obtained from this single measurement band 36A.

Step 64 concerns the compression of the data packet, in order to reduce the amount of data which needs to be communicated via the (wireless or wire-bound) data communication channel 46. Given the large number of potential wheel imprints that are continually registered on a busy trafficway 10, and given the relatively large data packet produced for each single potential wheel imprint, this compression is an important element of many embodiments of the present invention, especially if a wireless data communication channel 46 is used. However, the invention also comprises embodiments in which no compression is performed, especially in the case that a wire-bound data communication path between the roadside processing unit 42 and the processing center 44 is available.

The presently described embodiments use a wavelet compression technique to compress the data packets, each of which representing essentially a two-dimensional array of measured strain values. Wavelet compression is known as such, especially in the fields of image or video compression. The general principle of wavelet compression is to apply a wavelet transform to the data packet to be compressed. The wavelet transform expresses the data packet to be compressed as a combination of a plurality of wavelets and a corresponding plurality of parameters. The plurality of wavelets are given; they are derivable from a single basis wavelet, which is also known as the "mother wavelet". For example, in some cases the wavelets are derived by shifting and scaling the basis wavelet by powers of two. The wavelet transform process, which may be regarded as a filtering of the input data by a tree of filters known as a filter bank, determines the coefficients. A completely performed wavelet transform process just provides an alternative representation of the input data, without any loss of information.

The completely performed wavelet transform process results in the same number of coefficients as the number of measured strain values in the processed data packet. However, the "important" information from the processed data packet is concentrated into a few of the determined coefficients, whereas this information is more evenly distributed over the measured strain values. Using a lossless technique to encode the coefficients (such as run-length encoding or entropy encoding) will result in an overall lossless wavelet compression; the benefit resides in the fact that the coefficients can usually be encoded more efficiently by the lossless technique than the measured strain values. Lossless wavelet compression is use in some embodiments, while other embodiments employ lossy wavelet compression.

According to lossy wavelet compression, coefficients which comprise less important information are represented with reduced accuracy, or are omitted altogether in the compressed data. This process, with is called quantization, results in a loss of information, but the lost information is not necessary for the task at hand, namely for the subsequent determination of vehicle weight from a plurality of data packets. Of course, the wavelet transform process does not need to be performed completely, but can be stopped at a point where all further parameters would be omitted by the subsequent quantization.

An important element of the lossy or lossless wavelet compression technique used in the presently described embodiments is the selection of a suitable basis wavelet or mother wavelet. Many possible basis wavelets have been proposed for various applications. Some of the presently described embodiments use a basis wavelet known as the Mexican hat wavelet. Other embodiments use a basis wavelet called "roadlet", which is a modified version of the Mexican hat basis wavelet. The "roadlet" is designed to represent a shape of deformation of the surface layer of a typical trafficway caused by a load exerted by a wheel of a vehicle. The present disclosure, however, is not limited to the use of the Mexican hat wavelet or the "roadlet" as the basis wavelet. Other basis wavelets can be used as well. The compression can be performed based on the data packet seen as a 2D data field, or seen as a sequence of 1D data lines. Accordingly, either 2D or 1D wavelets (or "roadlets") can be used.

Surprising compression ratios are possible by the techniques described above, especially if lossy compression is used. It is believed that a data packet containing 20000 measured strain values (e.g., strain values from 10 strain gauges measured over an interval of 1 s at a measurement frequency of 2 kHz) can be compressed to about 10-15 coefficients, without any loss of information relevant for the task of weight determination. This represents a compression ratio in the region of 1000-2000.

As a further part of step 64 in embodiments which use lossy wavelet compression, the quantized coefficients are encoded using a suitable run-length encoding technique, or an entropy encoding technique, or another similar lossless compression technique. The result is combined with further information regarding the compressed values (such as a DC value), and with metadata (such as a timestamp, location information, and an identification of the sending roadside processing unit 42). The roadside processing unit 42 then sends the generated compressed data packet, in step 66, to the processing center 44 via the wireless data communication channel 46.

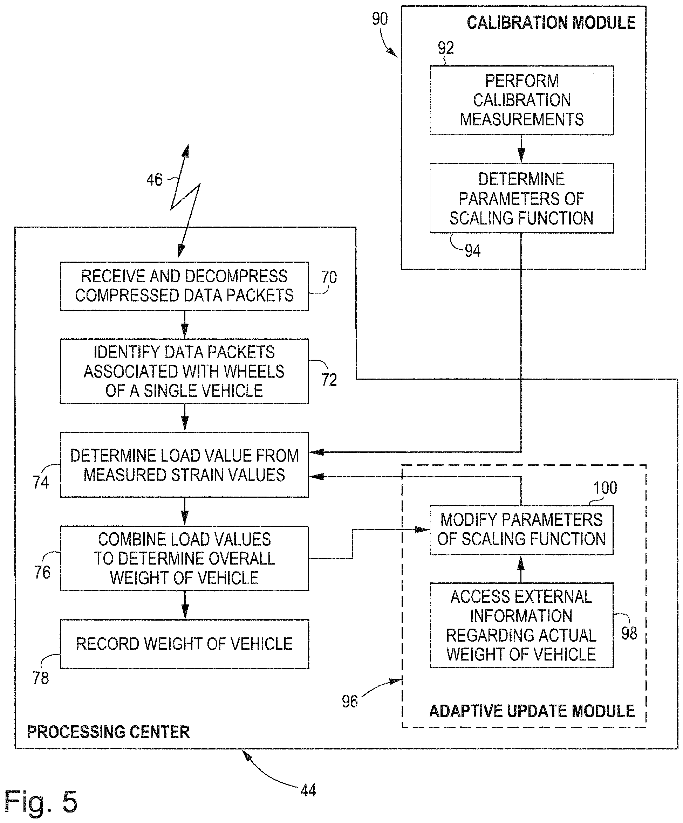

Fig. 5 shows the processing operations performed at the processing center 44. In step 70, the processing center 44 receives, and decompresses, the compressed data packets from the roadside processing unit 42. The data packets are then analyzed to identify, in step 72, those data packets which show imprints of wheels of a single vehicle. In some embodiments, step 72 is performed in two sub-steps, firstly by identifying data packets associated with wheels on a single axle of a particular vehicle, and secondly by associating the axles of the particular vehicle with each other. Step 72 may be performed using a variety of information, predefined rules, hard-coded knowledge, and heuristics. Measurement-related factors which can be taken into account include, but are not limited to, spatial distances between wheel imprints, temporal distances between wheel imprints (in connection between the speed determined by the time difference between the wheel imprints on the measurement bands 36x), similarity between wheel imprints (as, for example, imprints of wheels on a single axle tend to have a similar strain value pattern), and so on. Predefined rules and heuristics which can be taken into account include, but are not limited to, a rule that every vehicle must have at least two wheels, a rule that there is only a negligible number of tricycles, and so on.

After the possible wheel imprints of a single vehicle have been determined in step 72, the processing center 44 determines in step 74 an individual load value for each of the vehicle's wheels. The load value for a particular wheel of a vehicle indicates the vertical load exerted by the particular wheel on the surface layer 12 of the trafficway 10 in the vertical direction when the vehicle travels along the trafficway 10. Step 74, which is central to the weighing operation, will be described in further detail below.

In step 76, the load values for the individual wheels of the vehicle are combined into an estimated weight of the vehicle. In some embodiments, this combination simply sums the load values determined in step 74 for those wheels which have been associated with a single vehicle in step 72. In other embodiments, more complex calculations are performed to effect certain corrections. The determined weight of the vehicle is then recorded in step 78 for further operations, such as for the purpose of calculating a payable toll, or for the purpose of verifying compliance with applicable regulations.

It is apparent that the order in which Fig. 5 depicts the various processing operations is merely an example. The operations can be performed in many different arrangements, either sequentially in a number of different orders, or partly or fully parallel with each other. In particular, in some embodiments the determination of load values according to step 74 can be performed before step 72, so that steps 72 and 76 will then be performed together and may even be combined with each other.

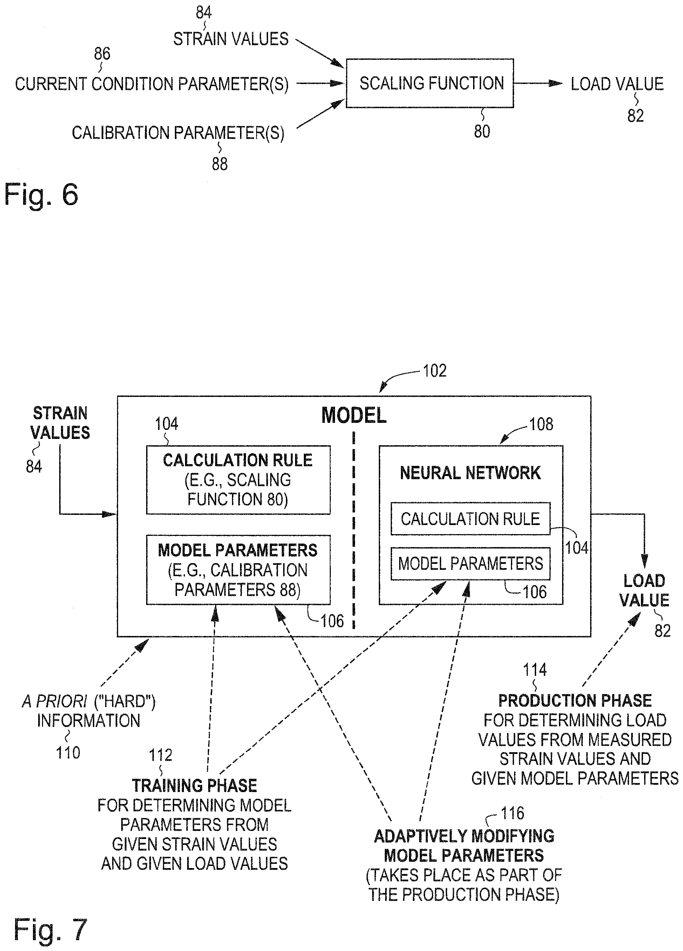

Fig. 6 illustrates a predetermined scaling function 80, which is used in the presently described embodiments in step 74 for determining a load value 82 for a particular wheel. The scaling function 80 shown in Fig. 6 takes as inputs (i) a set of measured strain values 84 for the particular wheel, (ii) one or more current condition parameters 86, and (iii) one or more calibration parameters 88. In the presently described embodiment, the scaling function 80 is developed by a human skilled person, using his or her knowledge of the properties of the surface layer 12, in particular the asphalt or other material from which the surface layer 12 is made. Suitable assumptions can be made; for example, the surface layer 12 can be assumed to have certain idealized viscoelastic properties, and/or can be assumed to have piecewise elastic properties. The scaling function 80 can be based on known theoretical models of the properties of the surface layer 12. The determination of the scaling function 80 by the human skilled person also includes a determination of the parameters 86, 88 of the scaling function 80.

The current condition parameters 86 of the scaling function 80 generally comprise parameters that relate to conditions under which the strain values 18x have been measured. In many embodiments, these parameters include, but are not limited to, some or all of the following: the current temperature of the surface layer 12, other current temperature values, the location of the wheel imprint in a direction transverse to the direction of the trafficway 10, the speed of the vehicle, and so on.

Taking, as an example, the current temperature of the surface layer 12, it is known that asphalt is more viscous at relatively higher temperatures, and less viscous at relatively lower temperatures. In other words, if asphalt is subjected to a given load, the asphalt will be deformed more quickly for higher temperatures. The exact kind of dependency is generally non-linear, but a suitable dependency curve is incorporated in the scaling function 80. For example, the dependency curve may be used to normalize the measured strain values 18x, or other intermediate values, to a standard reference temperature such as 20 °C. The dependency curve may be derived from a theoretical model of the properties of the surface layer 12, or it may be determined by experiments. The dependency curve depends on the material of the surface layer 12, but typically 2 or 3 calibration points or calibration parameters 88 are sufficient to adapt a given pseudo-universal curve to each commonly used material. In other embodiments, the dependency curve may be defined as an interpolation of a number of calibration points or calibration parameters 88. In yet further embodiments, one of the calibration parameters 88 is the dependency curve to be used from a predefined library of possible dependency curves.

Other factors which influence the scaling function 80, such as the current speed of the vehicle or the location of the wheel imprint in a direction across the trafficway 10 (corresponding to different locations along a profile of the trafficway 10) may be taken into account in the same way as explained above for the current temperature, using further dependency curves and further calibration parameters 88.

While a plurality of one-dimensional dependency curves has been explained above, it is apparent that other embodiments may also take two or more of the current condition parameters 86 into account in a single process, by using a two-dimensional or multidimensional dependency field. For example, the scaling function 80 may implement a two-dimensional dependency field which corrects the measured strain values 18x according to both the current temperature and the location of the wheel imprint in the direction across the trafficway 10. Again, the dependency field can be defined by a given pseudo-universal field and a few calibration parameters 88, or it can be fully defined as an interpolation between a plurality of calibration parameters 88, or the full dependency field can be regarded as a single calibration parameter 88.

It is apparent that some or all of the calibration parameters 88 may be hard-coded into the scaling function 80. This is possible, for example, if the scaling function 80 is specifically designed for a particular installation of the system 40 at a particular trafficway 10 having particular properties, and if certain ones of the calibration parameters 88 (such as parameters determined by the material of the surface layer 12) are unlikely to change over the lifetime of the system. In the presently used terminology, such hard-coded parameters are also called "calibration parameters".

In many embodiments, the settings of some or all of the calibration parameters 88 are initially determined by a human skilled person at the time the system 40 is manufactured or set up, taking known properties of the trafficway 10 and/or theoretical models into account. However, the present disclosure also includes embodiments in which some or all of the calibration parameters 88 are determined by measurements, during an initial calibration run. Fig. 5 shows a calibration module 90 which can be used to control such an initial calibration run. The calibration module 90 may be part of the processing center 44, or may be implemented in a separate apparatus which is only used in connection with the initial set-up and calibration of the system 40.

During the calibration run, a number of calibration measurements are performed in step 92, and the results are used in step 94 to determine the desired initial settings of some or all of the calibration parameters 88. The calibration measurements generally involve driving one or more vehicles of known weight(s) over the measurement bands 36x in the trafficway 10, and recording the determined strain values 18x. These strain values 18x are repeatedly processed according to steps 72-76 for different settings of the calibration parameters 88, and the determined weights are compared to the known weights of the vehicles used for the calibration measurements. The calibration module 90 tries to find settings for the calibration parameters 88 which reduce the error between the determined and the actual weights to a minimum. This process uses optimization techniques which are known as such, for finding at least a local (and preferably a global) error minimum. Finding suitable parameter settings generally requires substantial processing power, but the initial calibration process is not time critical.

The present disclosure is not limited to embodiments in which the initial calibration run is performed exactly once. Instead, embodiments are also contemplated in which the system 40 is re-calibrated using the calibration module 90 and dedicated calibration measurements from time to time, such as in the course of scheduled maintenance operations, or if repeated errors are detected.

As mentioned above, in many embodiments there are calibration parameters 88 which are not expected to change over the lifetime of the system 40, and other calibration parameters 88 which will conceivably change. Furthermore, there may have been inaccuracies in the measurements during the initial calibration run. Many embodiments therefore provide a way for adaptively modifying some or all of the calibration parameters 88 during regular operation ("production") of the system 40. This operation of "self-improving" is controlled by the adaptive update module 96, which is shown in Fig 5 as part of the processing center 44.

Generally speaking, the adaptive update module 96 tries to access, in step 98, external information about the actual weight of a vehicle that is currently being weighed by the system 40. In step 100, this external weight information is compared to the determined weight, and certain calibration parameters 88 are modified in order to reduce any remaining error. Again, optimization techniques which are known as such may be used to determine which of the calibration parameters 88 is/are to be modified, and by which amount(s). As a very simple example, one calibration parameter 88 may be chosen at random and modified by a random amount, and a determination may be made whether or not this modification reduces the error. The amount of modification is typically very small for each weighing of a vehicle, as the "correct" value of each calibration parameter 88 is expected to change very slowly over time, if at all.

Various ways are contemplated for accessing the external weight information in step 98. For example, and to the extent permitted by applicable national laws and regulations, the license plate of the vehicle may be scanned. The scanned license number may be used to access publicly available vehicle registration information, including a nominal weight of the empty vehicle. If the measured weight (deducting the weight of a driver and the weight of a typical amount of fuel) is similar to the nominal empty weight, then it may be assumed that the vehicle is empty, and that any deviation of the measured empty weight from the nominal empty weight represents a measurement error. As another example, specially marked calibration vehicles with known weights (e.g., weights which have been measured by other means and stored in a database) can be used. These calibration vehicles can be operated just for the purpose of calibration, or they can be "normal" vehicles transporting goods which in addition serve calibration purposes. In general, it is sufficient if the external weight information is available just for a small proportion of the overall number of vehicles traveling along the trafficway 10.

Fig. 7 represents a more abstract view of some ideas of the present disclosure. This view incorporates, as a more concrete example, the use of the scaling functions 80 as explained above. Generally speaking, the present disclosure teaches to determine a load value 82 from measured strain values 84 (such as, for example and without limitation, the determination made in step 74) using a model 102. The model 102 represents the properties of the trafficway 10, in particular the way in which certain loads acting on the surface layer 12 of the trafficway 10 lead to certain deformations and thus to certain strain values 84 in a plane in which the strain gauges 18x are located. The model 102 comprises a calculation rule 104 and a plurality of model parameters 106.

Fig. 7 schematically shows two possibilities of implementing the model 102. According to the first possibility, which is shown at the left-hand side of the dashed vertical line in Fig. 7 and corresponds to the approach described so far, the calculation rule 104 is implemented by the scaling function 80, and the model parameters 106 include at least the calibration parameters 88. According to the second possibility, which is shown at the right-hand side of the dashed vertical line in Fig. 7 and will be described in more detail below, the calculation rule 104 and the model parameters 106 are both part of a neural network 108. For example, the calculation rule 104 may correspond to the structure of neurons and connections in the neural network 108, and some or all of the model parameters 106 may correspond to weights within the neural network 108.

The model 102 incorporates *a priori* ("hard") information 110, such as given properties of the materials used in the trafficway 10 and physical constraints. The model 102 further comprises information determined during a training phase 112, in which known strain values 84 and known load values 82 are used to find suitable settings for some or all of the model parameters 106. A production phase 114 is distinguished from the training phase 112 in that the production phase 114 uses the model 102 for determining the load values 82 for measured strain values 84 and given model parameters 106. However, in many of the presently described embodiments, the production phase 114 also incorporates aspects of training the neural network 108 because some or all of the model parameters 106 are adaptively updated in operation 116 as part of the production phase 114. The initial training phase 112 may be called a "self-learning phase", while the adaptive updating 116 may be called "self-improving" of the model 102.

The overall object of the training phase 112 and the adaptive updating 116 is to vary the model 102 (in particular its model parameters 106) so that the model 102 matches the real properties of the trafficway 10, as determined by the measurements, as well as possible. The inventors have found that the determination of model parameters 106 in the training phase 112, and in particular the adaptive updating 116 of the model parameters 106 as part of the production phase 114, can be likened to a process called "inversion" in seismic engineering, and can benefit from techniques developed in connection with seismic inversion. For example, the training phase 112 using a set of given strain values and load values can be regarded as equivalent to a seismic inversion for "effective road properties".

Similarly, the use of a neural network 108 as the model 102 has the advantage that self-learning techniques and or self-improving techniques known as such in the field of neural networks can also be used in the context of the present invention. For example, according to some embodiments, the neural network 108 includes one or both of (i) at least one feedback loop, and (ii) at least one hidden layer.

The use of a feedback loop in the neural network 108 may be beneficial for the process of learning from continuous data because applying a feedback function (which may, for example and without limitation, be a linear transformation followed by a squashing nonlinearity) forces the learning of important aspects, and also helps to reduce the effects of artifacts and noise. The use of a hidden layer, which is interposed between an input layer and a separate output layer of the neural network 108, may also enhance "wanted" (i.e., trained) features, again by applying nonlinear transformations such as filters or feature-enhancing modifiers.

For example and without limitation, a feedback loop or a hidden layer may use functions including one or more of: (i) smoothers, (ii) filters, (iii) a simple exponentiation function, (iv) scaling functions, (v) non-linear box identifiers, and/or (vi) simple non-linear transformations to emphasize maxima and minima of a wheel imprint signal, thereby emphasizing the wheel imprint itself. As further non-limiting examples, operations could facilitate the creation of symmetric (e.g., circular) imprints by averaging X and Y components, and so on. The idea of introducing some form of non-linear emphasizing or non-linear conditioning is generally regarded as an advantageous possibility, which can also be used in the context of the scaling function 80 described above.

The particulars contained in the above description of sample embodiments should not be construed as limitations of the scope of the invention, but rather as exemplifications of some embodiments thereof. Many variations are possible and are immediately apparent to persons skilled in the arts. Accordingly, the scope of the invention should be determined not by the embodiments illustrated, but by the appended claims.

### LIST OF REFERENCE SIGNS

- 10: trafficway
- 12: surface layer
- 14: subconstruction
- 16: natural ground
- 18x: strain gauge
- 20: chain
- 22: optical fiber
- 24x: fiber Bragg grating
- 26x: anchor
- 28: wheel
- 30: force
- 32: strain
- 34x: linear arrangement
- 36x: measurement band

- 40: system
- 42: roadside processing unit
- 44: processing center
- 46: wireless data communication channel
- 48: data acquisition loop
- 50: data processing loop
- 52, 54: steps of data acquisition loop
- 56: ring buffer
- 58 - 66: steps of data processing loop

- 70 - 78: steps performed at processing center
- 80: scaling function
- 82: load value
- 84: measures strain values
- 86: current condition parameter(s)
- 88: calibration parameter(s)
- 90: calibration module
- 92, 94: steps performed by the calibration module
- 96: adaptive update module
- 98, 100: steps performed by the adaptive update module
- 102: model
- 104: calculation rule
- 106: model parameters
- 108: neural network
- 110: *a priori* information
- 112: training phase
- 114: production phase
- 116: adaptive updating

- V: tractor trailer

## Claims

1. A method for determining load values (82) from strain values (84), wherein the load values (82) correspond to vertical loads exerted by wheels (28) of vehicles traveling along a trafficway (10), wherein the trafficway (10) comprises a surface layer (12) arranged on a subconstruction (14), the method comprising:
- providing a model (102) of at least the surface layer (12),
-- wherein the model (102) comprises a calculation rule (104) for calculating at least one load value (82) from at least one strain (84) value and a plurality of model parameters (106),
-- wherein the at least one load value (82) represents at least one load exerted by a wheel (28) of a vehicle on the surface layer (12) of the trafficway (10),
-- wherein the plurality of model parameters (106) represent properties associated with at least one of the trafficway (10), a strain gauge (18x), the vehicle, and an environment, and
-- wherein the at least one strain value (84) represents a strain in a plane parallel to the surface layer (12) generated by the at least one load;
- conducting a training phase (112) in which given load values (84) and given strain values (82) are applied to the model (102) to determine values for the plurality of model parameters (106); and
- conducing a production phase (114) in which measured strain values (84) and the values for the plurality of model parameters (106) determined during the training phase (112) are applied to the model (102) to determine load values (82).

2. The method of claim 1, further comprising adaptively modifying (116) at least one of the plurality of model parameters (106).

3. The method of claim 2, wherein the operation of adaptively modifying (116) at least one of the plurality of model parameters (106) uses information about the weight of vehicles obtained from external sources.

4. The method of any of claims 1-3, wherein the model (102) is implemented as a neural network (108) comprising at least one of (i) a feedback loop, or (ii) a hidden layer.

5. A method for determining weights of vehicles in motion on a trafficway (10), the method comprising:
- determining a plurality of measured strain values (84) from a plurality of strain gauges (18x), the plurality of strain gauges (18x) being arranged in, or on top of, a surface layer (12) of the trafficway (10) and measuring strain in a plane substantially parallel to the surface layer (12);
- determining, based at least on the plurality of measured strain values (84), a plurality of load values (82) in accordance with the method of claim 1; and
- determining, based at least on the plurality of load values (82), an indication of a weight of said vehicle.

6. The method of claim 5, wherein the calculation rule (104) is implemented by a scaling function (80) and the model parameters (106) include at least a calibration parameter (88).

7. The method of any of claims 5 and 6, wherein the plurality of strain gauges (18x) comprises a plurality of optical fiber strain gauges.

8. The method of any of claims 5-7, wherein at least some of the plurality of strain gauges (18x) are arranged in at least one linear arrangement (34x) traverse or oblique to a direction of traffic on the trafficway (10).

9. The method of any of claims 5-8, wherein the operation of determining the plurality of load values (82) comprises determining a subset of the plurality of measured strain values (18x) that is assumed to correspond to the strain caused by a single wheel (28).

10. The method of claim 9, wherein the operation of determining the indication of the weight of the vehicle comprises determining a subset of the plurality of determined load values (82) that is assumed to correspond to respective loads caused by wheels (28) of a single vehicle.

11. The method of any of claims 5-10, further comprising:
- compressing, by a roadside processing unit (42), the plurality of measured strain values (84) using a wavelet compression technique to obtain compressed data;
- transmitting the compressed data from the roadside processing unit (42) to a processing center (44); and
- decompressing, by the processing center (44), the compressed data.

12. The method of claim 11, wherein the wavelet compression technique uses a basis wavelet that represents a shape of deformation of the surface layer (12) of the trafficway (10) caused by a load exerted by a wheel (28) of a vehicle.

13. The method of claim 11 or claim 12, wherein the compressing comprises:
- applying a wavelet transformation to a some or all of the plurality of measured strain values (84) to obtain a plurality of coefficients; and
- losslessly encoding some or all of the obtained plurality of coefficients, or quantized versions thereof.

14. A computing system (40) comprising a plurality of processors and memory storing program instructions, wherein the program instructions are adapted to cause the system to perform operations including the operations recited in any of claims 1-13.

15. A computer program product having program instructions stored thereon, wherein the program instructions are adapted to cause a computing system (40), when executing the program instructions, to perform operations including the operations recited in any of claims 1-13.

## Patentansprüche

1. Verfahren zum Ermitteln von Belastungswerten (82) aus Dehnungswerten (84), wobei die Belastungswerte (82) Vertikalbelastungen entsprechen, die von Rädern (28) von Fahrzeugen ausgeübt werden, die entlang einem Verkehrsweg (10) fahren, wobei der Verkehrsweg (10) eine Oberflächenschicht (12) umfasst, die auf einer Unterkonstruktion (14) angeordnet ist, wobei das Verfahren umfasst:
- Bereitstellen eines Modells (102) von mindestens der Oberflächenschicht (12),
-- wobei das Modell (102) eine Berechnungsregel (104) zum Berechnen mindestens eines Belastungswerts (82) aus mindestens einem Dehnungswert (84) und einer Vielzahl von Modellparametern (106) umfasst,
-- wobei der mindestens eine Belastungswert (82) mindestens eine Belastung darstellt, die von einem Rad (28) eines Fahrzeugs auf die Oberflächenschicht (12) des Verkehrsweges (10) ausgeübt wird,
-- wobei die Vielzahl von Modellparametern (106) Eigenschaften darstellen, die mit mindestens einem von dem Verkehrsweg (10), einem Dehnungsmessstreifen (18x), dem Fahrzeug und einer Umgebung assoziiert sind, und
-- wobei der mindestens eine Dehnungswert (84) eine Dehnung in einer Ebene parallel zur Oberflächenschicht (12) darstellt, die durch die mindestens eine Belastung erzeugt wird;
- Durchführen einer Trainingsphase (112), in der vorgegebene Belastungswerte (84) und vorgegebene Dehnungswerte (82) auf das Modell (102) angewendet werden, um Werte für die Vielzahl von Modellparametern (106) zu ermitteln; und
- Durchführen einer Produktionsphase (114), in der gemessene Dehnungswerte (84) und die während der Trainingsphase (112) ermittelten Werte für die Vielzahl von Modellparametern (106) auf das Modell (102) angewendet werden, um Belastungswerte (82) zu ermitteln.

2. Verfahren nach Anspruch 1, ferner ein adaptives Modifizieren (116) von mindestens einem der Vielzahl von Modellparametern (106) umfassend.

3. Verfahren nach Anspruch 2, wobei der Vorgang des adaptiven Modifizierens (116) von mindestens einem aus der Vielzahl von Modellparametern (106) Informationen über das Gewicht von Fahrzeugen verwendet, die aus externen Quellen erhalten wurden.

4. Verfahren nach einem der Ansprüche 1-3, wobei das Modell (102) als ein neuronales Netzwerk (108) implementiert ist, das mindestens eines von (i) einer Rückkopplungsschleife oder (ii) einer verborgenen Schicht umfasst.

5. Verfahren zum Ermitteln von Gewichten von Fahrzeugen in Bewegung auf einem Verkehrsweg (10), wobei das Verfahren umfasst:
- Ermitteln einer Vielzahl von gemessenen Dehnungswerten (84) aus einer Vielzahl von Dehnungsmessstreifen (18x), wobei die Vielzahl von Dehnungsmessstreifen (18x) in oder über einer Oberflächenschicht (12) des Verkehrsweges (10) angeordnet ist und Dehnung in einer Ebene misst, die im Wesentlichen parallel zur Oberflächenschicht (12) ist;
- Ermitteln, mindestens basierend auf der Vielzahl von gemessenen Dehnungswerten (84), einer Vielzahl von Belastungswerten (82) gemäß dem Verfahren nach Anspruch 1; und
- Ermitteln, mindestens basierend auf der Vielzahl von Belastungswerten (82), einer Angabe eines Gewichts des Fahrzeugs.

6. Verfahren nach Anspruch 5, wobei die Berechnungsregel (104) durch eine Skalierungsfunktion (80) implementiert ist und die Modellparameter (106) mindestens einen Kalibrierungsparameter (88) umfassen.

7. Verfahren nach einem der Ansprüche 5 und 6, wobei die Vielzahl von Dehnungsmessstreifen (18x) eine Vielzahl von optischen Faserdehnungsmessstreifen umfasst.

8. Verfahren nach einem der Ansprüche 5-7, wobei mindestens ein Teil der Vielzahl von Dehnungsmessstreifen (18x) in mindestens einer linearen Anordnung (34x) quer oder schräg zu einer Richtung des Verkehrs auf dem Verkehrsweg (10) angeordnet ist.

9. Verfahren nach einem der Ansprüche 5-8, wobei der Vorgang des Ermittelns der Vielzahl von Belastungswerten (82) das Ermitteln einer Teilmenge der Vielzahl von gemessenen Dehnungswerten (18x) umfasst, von der angenommen wird, dass sie der Dehnung entspricht, die durch ein einzelnes Rad (28) verursacht wird.

10. Verfahren nach Anspruch 9, wobei der Vorgang des Ermittelns der Angabe des Gewichts des Fahrzeugs das Ermitteln einer Teilmenge der Vielzahl von ermittelten Belastungswerten (82) umfasst, von der angenommen wird, dass sie jeweiligen Belastungen entspricht, die durch Räder (28) eines einzelnen Fahrzeugs verursacht werden.

11. Verfahren nach einem der Ansprüche 5-10, ferner umfassend:
- Komprimieren, durch eine straßenseitige Verarbeitungseinheit (42), der Vielzahl von gemessenen Dehnungswerten (84) unter Verwendung einer Wavelet-Komprimierungstechnik, um komprimierte Daten zu erhalten;
- Übertragen der komprimierten Daten von der straßenseitigen Verarbeitungseinheit (42) zu einem Verarbeitungszentrum (44); und
- Dekomprimieren, durch das Verarbeitungszentrum (44), der komprimierten Daten.

12. Verfahren nach Anspruch 11, wobei die Wavelet-Komprimierungstechnik ein Basis-Wavelet verwendet, das eine Form der Verformung der Oberflächenschicht (12) des Verkehrsweges (10) darstellt, die durch eine Belastung verursacht wird, die von einem Rad (28) eines Fahrzeugs ausgeübt wird.

13. Verfahren nach Anspruch 11 oder Anspruch 12, wobei das Komprimieren umfasst:
- Anwenden einer Wavelet-Transformation auf einige oder alle der Vielzahl von gemessenen Dehnungswerten (84), um eine Vielzahl von Koeffizienten zu erhalten; und
- verlustfreies Codieren einiger oder aller der erhaltenen Vielzahl von Koeffizienten oder quantisierten Versionen davon.

14. Computersystem (40), eine Vielzahl von Prozessoren und Programmanweisungen zur Einspeicherung umfassend, wobei die Programmanweisungen dazu ausgelegt sind, das System zum Durchführen von Vorgängen zu veranlassen, die die Vorgänge umfassen, die in einem der Ansprüche 1-13 aufgeführt sind.

15. Computerprogrammprodukt, das darauf gespeicherte Programmanweisungen aufweist, wobei die Programmanweisungen dazu ausgelegt sind, ein Computersystem (40) zu veranlassen, beim Ausführen der Programmanweisungen, Vorgänge auszuführen, die die Vorgänge umfassen, die in einem der Ansprüche 1-13 aufgeführt sind.

## Revendications

1. Procédé de détermination de valeurs de charge (82) à partir de valeurs de contrainte (84), dans lequel les valeurs de charge (82) correspondent à des charges verticales exercées par des roues (28) de véhicules se déplaçant le long d'une voie de circulation (10), dans lequel la voie de circulation (10) comprend une couche de surface (12) agencée sur une sous-construction (14), le procédé comprenant :
- la fourniture d'un modèle (102) d'au moins la couche de surface (12),
-- dans lequel le modèle (102) comprend une règle de calcul (104) pour calculer au moins une valeur de charge (82) à partir d'au moins une valeur de contrainte (84) et d'une pluralité de paramètres de modèle (106),
-- dans lequel l'au moins une valeur de charge (82) représente au moins une charge exercée par une roue (28) d'un véhicule sur la couche de surface (12) de la voie de circulation (10),
-- dans lequel la pluralité de paramètres de modèle (106) représentent des propriétés associées à au moins l'un parmi la voie de circulation (10), une jauge de contrainte (18x), le véhicule et un environnement, et
-- dans lequel l'au moins une valeur de contrainte (84) représente une contrainte dans un plan parallèle à la couche de surface (12) générée par l'au moins une charge ;
- la mise en œuvre d'une phase d'apprentissage (112) dans laquelle des valeurs de charge (84) données et des valeurs de contrainte (82) données sont appliquées au modèle (102) pour déterminer des valeurs pour la pluralité de paramètres de modèle (106) ; et
- la mise en œuvre d'une phase de production (114) dans laquelle des valeurs de contrainte (84) mesurées et les valeurs pour la pluralité de paramètres de modèle (106) déterminées pendant la phase d'apprentissage (112) sont appliquées au modèle (102) pour déterminer des valeurs de charge (82).

2. Procédé selon la revendication 1, comprenant en outre la modification adaptative (116) d'au moins un de la pluralité de paramètres de modèle (106).

3. Procédé selon la revendication 2, dans lequel l'opération de modification adaptative (116) d'au moins un de la pluralité de paramètres de modèle (106) utilise des informations concernant le poids de véhicules obtenues à partir de sources externes.

4. Procédé selon l'une quelconque des revendications 1 à 3, dans lequel le modèle (102) est implémenté sous la forme d'un réseau de neurones (108) comprenant au moins l'une parmi (i) une boucle de rétroaction ou (ii) une couche cachée.

5. Procédé de détermination des poids de véhicules en mouvement sur une voie de circulation (10), le procédé comprenant :
- la détermination d'une pluralité de valeurs de contrainte (84) mesurées à partir d'une pluralité de jauges de contrainte (18x), la pluralité de jauges de contrainte (18x) étant agencées dans une, ou au-dessus d'une, couche de surface (12) de la voie de circulation (10) et la mesure de la contrainte dans un plan sensiblement parallèle à la couche de surface (12) ;
- la détermination, sur la base au moins de la pluralité de valeurs de contrainte (84) mesurées, d'une pluralité de valeurs de charge (82) selon le procédé selon la revendication 1 ; et
- la détermination, sur la base au moins de la pluralité de valeurs de charge (82), d'une indication d'un poids dudit véhicule.

6. Procédé selon la revendication 5, dans lequel la règle de calcul (104) est implémentée par une fonction de mise à l'échelle (80) et les paramètres de modèle (106) comprennent au moins un paramètre d'étalonnage (88).

7. Procédé selon les revendications 5 et 6, dans lequel la pluralité de jauges de contrainte (18x) comprennent une pluralité de jauges de contrainte à fibre optique.

8. Procédé selon l'une quelconque des revendications 5 à 7, dans lequel au moins certaines de la pluralité de jauges de contrainte (18x) sont agencées selon au moins un agencement linéaire (34x) transversal ou oblique par rapport à une direction de circulation sur la voie de circulation (10).

9. Procédé selon l'une quelconque des revendications 5 à 8, dans lequel l'opération de détermination de la pluralité de valeurs de charge (82) comprend la détermination d'un sous-ensemble de la pluralité de valeurs de contrainte (18x) mesurées qui est supposé correspondre à la contrainte provoquée par une seule roue (28).

10. Procédé selon la revendication 9, dans lequel l'opération de détermination de l'indication du poids du véhicule comprend la détermination d'un sous-ensemble de la pluralité de valeurs de charge (82) déterminées qui est supposée correspondre aux charges respectives provoquées par les roues (28) d'un seul véhicule.

11. Procédé selon l'une quelconque des revendications 5 à 10, comprenant en outre :
- la compression, par une unité de traitement côté route (42), de la pluralité de valeurs de contrainte (84) mesurées en utilisant une technique de compression par ondelettes pour obtenir des données compressées ;
- la transmission des données compressées de l'unité de traitement côté route (42) à un centre de traitement (44) ; et
- la décompression, par le centre de traitement (44), des données compressées.

12. Procédé selon la revendication 11, dans lequel la technique de compression par ondelettes utilise une ondelette de base qui représente une forme de déformation de la couche de surface (12) de la voie de circulation (10) provoquée par une charge exercée par une roue (28) d'un véhicule.

13. Procédé selon la revendication 11 ou la revendication 12, dans lequel la compression comprend :
- l'application d'une transformation en ondelettes à une partie ou à la totalité de la pluralité de valeurs de contrainte (84) mesurées pour obtenir une pluralité de coefficients ; et
- le codage sans perte d'une partie ou de la totalité de la pluralité de coefficients obtenue, ou de versions quantifiées de ceux-ci.

14. Système informatique (40) comprenant une pluralité de processeurs et une mémoire stockant des instructions de programme, dans lequel les instructions de programme sont adaptées pour amener le système à effectuer des opérations comprenant les opérations énoncées dans l'une quelconque des revendications 1 à 13.

15. Produit programme d'ordinateur sur lequel sont stockées des instructions de programme, dans lequel les instructions de programme sont adaptées pour amener un système informatique (40), lors de l'exécution des instructions de programme, à effectuer des opérations comprenant les opérations énoncées dans l'une quelconque des revendications 1 à 13.
